# EUROPEAN PATENT APPLICATION

(11) **EP 4 513 875 A1**
(43) Date of publication of application: **26.02.2025**
(21) Application number: 23306406.2
(22) Date of filing: 23.08.2023
(51) Int. Cl.: H04N 21/2343, H04L 65/612, H04N 21/6405, H04N 21/6408, H04N 21/6547, H04N 21/845

(54) **METHOD IN AN AUDIO / VIDEO GATEWAY DEVICE FOR CONDITIONALLY PROVIDING A SPECIFIC MANIFEST FILE RELATED TO THE DOWNLOAD OF PORTIONS OF AUDIO/VIDEO CONTENT VIA A MULTICAST TRANSMISSION MODE**

(71) Applicant: Broadpeak, 35510 Cesson Sevigne (FR)
(72) Inventor: RENARD, Nicolas, 35510 CESSON SEVIGNE (FR); BALE, Sophie, 35510 CESSON SEVIGNE (FR); BREBION, Rémy, 35510 CESSON SEVIGNE (FR)
(74) Representative: Cabinet Le Guen Maillet

(57) **Abstract**

The invention relates to a method for conditionally providing a metadata manifest file, by an audio and/or video gateway device (16), to an audio and/or video player device (17, 18), obtained according to a unicast transmission mode, depending on whether a first identifier of a first portion of an audio/video content referenced in said specific metadata file, has a value less than or equal to the value of a second identifier, of a second portion of said audio and/or video content corresponding to said first portion of said audio and/or video content, as referenced in a generic metadata file, made available to said audio and/or video content player device or to said gateway device via a transmission link operating in multicast mode and obtained by said gateway device.

## Description

### TECHNICAL FIELD

The present invention relates to the field of online distribution of audio and/or video content. The invention relates more particularly to an optimized provision, by an audio and/or video gateway, to an audio and/or video player device, of metadata files (commonly called *manifest* or *manifest file*) comprising characteristics specific to audio and/or video content accessible to this player device via this gateway.

### RELATED ART

The delivery of audio/video content to an audio/video content player device, from a remote audio/video content server, in order to allow the audio/video content player device to play back this audio/video content (e.g., movies or music), has been known for a long time and has been progressively improved. To date, numerous techniques known as audio and/or video streaming are available to operate in various contexts, such as a large number of player devices simultaneously transferring content from the same content server, a very busy communication network, or very varied playback modes with regard to the capacities of each of the player devices playing back the same audio/video content, for example.

Most often, an audio and/or video content is accessible to a player using a transfer mode called multicast, according to which the content is broadcasted through the network in branches of the network via which at least one player device performs a download, which has the advantage of not multiplying unnecessarily the transfer of an audio and/or video content as many times as there are players playing it. But many streaming techniques transfer audio and/or video content between one or more audio and/or video content servers and a player device, by combining multicast and unicast transmission modes, for optimization purposes in particular contexts. In addition, it is not uncommon for several player devices in the same household to receive and play back several audio and/or video contents, and audio and/or video gateway devices or modules are implemented centrally in the local home network to optimize the organization of these operations.

The reception of a metadata file, usually called *"manifest file"* or *"manifest",* is necessary for a player device to obtain characteristics for downloading portions (also called segments) of an audio and/or video content available before transferring them to it (to the player device) and playing back (rendering) these portions by this player device. These characteristics are, for example, a set of versions for a video content split into portions with for each portion, an identifier of, its duration as well as a URL (Uniform Resource Allocator) where this portion of audio and/or video content is available. Once the metadata file is acquired by the player device, the latter typically requests/gets the portions of the audio and/or video content through the same server than the one used to get the manifest file (portions are associated with a relative URL) although it is not always possible (portions associated with an absolute URL gathering a host name different than the one used to acquire the manifest file).

This type of metadata (manifest) file can be generic or specific. Indeed, some player devices may be configured in a very specific way and are able to play only a subset of the available versions of the same audio and/or video content (e.g., content with limited graphic resolutions only, or a soundtrack in certain languages only, or a content with an inserted ad targeting a given customer, etc.). The multiplicity of specific versions of metadata files, destined for player devices with specific playback properties, is such that it is not reasonable or even conceivable to distribute them to player devices in multicast transmission modes, and a transmission of a specific metadata file is often more suitable in a unicast (point-to-point) delivery mode. In this case, when a specific metadata file is delivered via a unicast transmission mode, the corresponding audio and/or video content is still transmitted to the player device via a multicast transmission mode, at least when it is possible, and synchronization and/or consistency problems may occur between the metadata provided to a player and related to specific portions of an audio and/or video content and the actual provision, via a multicast distribution mode, of these portions of content, for this same player device. There is thus a need to guarantee a coherence between the supply in unicast mode of a specific file of metadata to a device player of audio and/or video contents, relating to a portion of an audio and/or video content, and the precise moment of provision of this portion of contents for this same content player, via a multicast transmission mode. The situation can be improved.

### SUMMARY OF THE INVENTION

An object of the present invention is to propose an optimized provisioning of a specific unicast metadata file for an audio and/or video content player operating a playback of an audio and/or video content, according to conditions of availability, via a multicast link, of portions of the content referred to in the metadata file.

To this end, it is proposed a method for providing, by an audio and/or video gateway device, to an audio and/or video content player device requesting it, a specific unicast file of metadata relating to a transmission of portions of an audio and/or video content, said audio and/or video content being in the process of being played or to be played by said player device, via a transmission from an audio and/or video content server and according to a multicast type transmission mode, the method comprising a step of conditionally supplying to said player device a specific unicast file of metadata depending on whether a first identifier of a first portion of an audio/video content referenced in said specific unicast metadata file, has a value less than or equal to the value of a second identifier, of a second portion of said audio and/or video content corresponding to said first portion of said audio and/or video content, as referenced in a generic metadata file, made available to said gateway device via a transmission link operating in multicast mode and obtained by said gateway device.

The method according to the invention can also comprise the following characteristics, considered alone or in any combination:
- The method for providing a specific unicast metadata file comprises, performed by said gateway device:
   - obtaining and storing, from a multicast receiving interface of said gateway device, said generic metadata file describing said audio and/or video content,
   - obtaining and storing said second identifier of a portion of said content, from said generic metadata file, said second identifier corresponding to the latest available portion of audio and/or video content among a plurality of portions of said content referenced in said generic content description metadata file,
   - obtaining and storing, from a unicast receiving interface of said gateway device, said specific unicast metadata file describing said audio and/or video content, the portions of audio and/or video content referenced by the metadata of said specific metadata file being a subset (i.e. some version or all versions but available at a different point in time) of the portions of audio and/or video content referenced by the metadata of said generic metadata file, and,
   - obtaining and storing said first identifier of a portion of said content, from said specific unicast metadata file, said first identifier corresponding to the latest available portion of audio and/or video content among a plurality of portions of said content referenced in said specific unicast content description metadata file.
- The method for providing a specific unicast metadata file is such that, in case of impossibility of obtaining by said gateway device said generic metadata file within a first predefined time, said audio and/or video gateway device transmits to said audio and/or video content player the last unicast metadata file previously obtained from an audio and/or video content server via a unicast transmission mode.
- The method for providing a specific unicast metadata file is such that, in case of impossibility of obtaining by said gateway device said specific unicast metadata file within a second predefined time, said audio and/or video gateway device transmits to said audio and/or video content player the last unicast metadata file previously obtained from an audio and/or video content server via a unicast transmission mode.
- The method of providing a specific metadata file is such that said first identifier and said second identifier are sequence numbers of said audio and/or video content defining a chronological order of presentation of said portions of said audio and/or video content upon playback of said audio and/or video content, according to a predefined convention implying that a higher identifier value corresponds to a time of playback of audio and/or video content subsequent to a playback time corresponding to a lower identifier value.

The invention also relates to a computer program product comprising program code instructions for executing the steps of the method described hereabove when said program is executed by a processor, and to an information storage medium comprising such a computer program product.

Another object of the invention is an audio and/or video gateway device comprising electronic circuitry configured to supply, to an audio and/or video content player device, a specific file of metadata relating to a transmission of portions of an audio and/or video content, said content being in the process of being played or to be played by said player device, via a transmission from an audio and/or video content server and according to a multicast type transmission mode, the audio and/or video gateway device comprising circuitry configured for conditionally supplying said player device with a specific file of metadata depending on whether or not a first identifier of a first portion of an audio and/or video content referenced in said specific metadata file, has a value less than or equal to the value of a second identifier, of a second portion of said audio and/or video content corresponding to said first portion of said audio/video content, as referenced in a generic metadata file, made available to said audio and/or video content player device or to said gateway device via a transmission link operating in multicast mode and obtained by said gateway device.

According to an embodiment, the audio and/or video gateway device described hereabove further comprises electronic circuitry configured for:
- obtaining, from a multicast receiving interface of said gateway device, said generic metadata file describing said audio and/or video content,
- obtaining and storing said second identifier of a portion of said content, from said generic metadata file, said second identifier corresponding to a portion of audio and/or video content that is available the latest among a plurality of portions of said content referenced in said generic content description metadata file,
- obtaining, from a unicast receiving interface of said gateway device, said specific metadata file describing said audio/video content, the portions of audio and/or video content referenced by the metadata of said specific unicast metadata file being a subset of the portions of audio and/or video content referenced by the metadata of said generic metadata file, and,
- obtaining and storing said first identifier of a portion of said content, from said specific unicast metadata file, said first identifier corresponding to the latest available portion of audio and/or video content among a plurality of portions of said content referenced in said specific unicast content description metadata file.

### BRIEF DESCRIPTION OF THE DRAWINGS

The characteristics of the invention mentioned above, as well as others, will appear more clearly on reading the following description of at least one embodiment, said description being made in relation to the attached drawings, among which:
[Fig. 1] schematically illustrates a communication network 1 comprising a gateway device which comprises a gateway agent according to one embodiment;
[Fig. 2] is a diagram illustrating a method of providing a specific metadata file according to an embodiment; and,
[Fig. 3] schematically illustrates an architecture of a gateway device or a gateway device agent according to an embodiment.

### DETAILED DESCRIPTION OF AT LEAST ONE EMBODIMENT

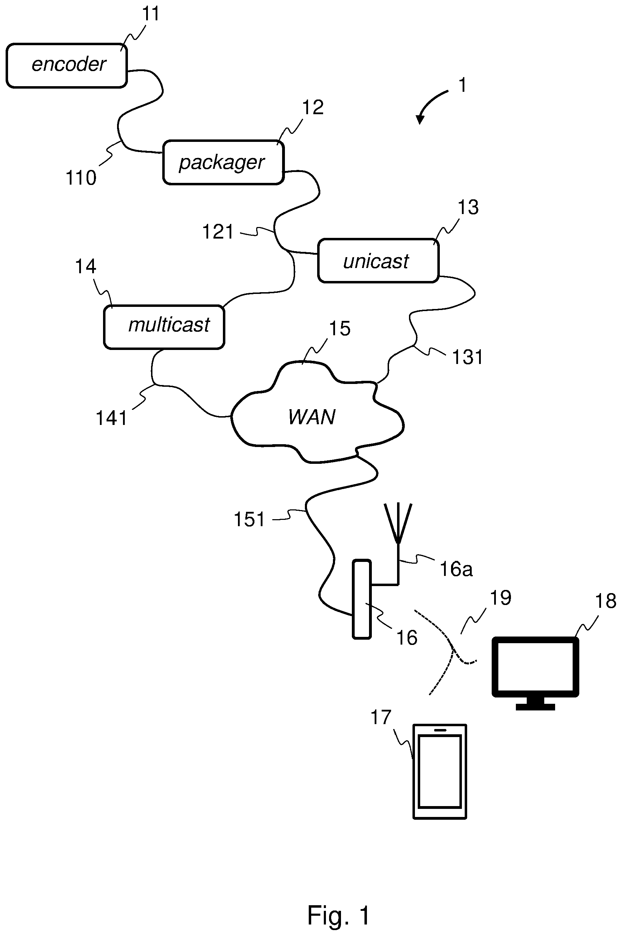

**Fig. 1** schematically illustrates a communication network 1. The communication network 1 can comprise both local area networks (LAN) and wide area networks (WAN).

The communication network 1 is suitable for the transmission of information of different kinds, such as files, e-mail type messages, and audio and/or video content for example. The infrastructure of the communication network 1 is configured to allow transmissions (transfers) of audio and/or video content with a view to reading and subsequent rendering by a device connected to the communication network 1 or even to allow transmissions of audio and/or video content being played and rendered. Thus, the communication network 1 is configured to allow transmissions of audio and/or video content of the "streaming" type. The communication network 1 is configured to allow transmissions of audio and/or video content of the streaming type in unicast mode (point to point) and/or in multicast mode (from a server to a set of subscribers).

The communication network 1 comprises an audio and/or video encoder 11 configured to encode audio and/or video content in predefined coding formats, with a view to storing or transporting these audio and/or video content. The encoder 11 is capable of carrying out operations for encoding audio and/or video content from signals originating from sound and/or image capture devices or else originating from devices or equipment dedicated to sound and/or image processing. For example, some inputs of the encoding device 11 can be connected to one or more cameras, to one or more microphones, or even to a television control truck, or to audio and/or video transcoding equipment, television control equipment of a television channel, these examples not being limiting in any way.

The communication network 1 further comprises a device 12 for packetizing information received from the encoder 11. This device 12 for packetizing information is otherwise referred to here as a "packager" 12. The packetization of information by the packager 12 allows information to be processed according to pre-established standards and/or protocols such as, for example, coding standards and protocols with a view to transmission or even data transmission standards and protocols. In particular, data transmission standards specific to audio and/or video type data can be advantageous insofar as they have been defined for this purpose and have advantages (modularity, duplication, error correction, variety of formats and resolution of sounds and images, for example).

The encoder 11 and the packetizer 12 are connected by a connection link 110 of the communication network 1.

The communication network 1 further comprises a device 13 for distributing audio and/or video content operating in unicast distribution mode, here called unicast server 13, as well as a device 14 for distributing audio and/or video content operating in multicast distribution mode, here called multicast server 14. The packager 12, the unicast server 13 and the multicast server 14 are connected by a connection link 121 of the communication network 1. According to one embodiment, several of the devices described among the encoder 11, packager 12, unicast server 13 and multicast server 14 can be included in the same equipment or be implemented in separate equipment.

The unicast server 13 is configured to deliver audio and/or video content in point-to-point transmission mode, that is to say it sends a portion of audio and/or video content identified to a remote device requesting it and operates as many transmissions of portions of content as it receives requests to this effect.

The multicast server 14 is configured to deliver audio and/or video content in multicast transmission mode, that is to say to a group of subscribers to the broadcast of the same audio and/or video content. It therefore operates a distribution of audio and/or video content as soon as at least a first subscriber requests this content. If a second subscriber requests the same content, a routing protocol then ensures the distribution of the audio and/or video content to the first subscriber and to the second subscriber. The routing protocol is, for example, the IGMP protocol (from "Internet Group Management Protocol"). The unicast server 13 is connected to a broadband network 15 of the WAN (Wide Area Network) type via a connection link 131. The multicast server 14 is also connected to the broadband network 15. In addition, a home gateway device 16 is connected to the broadband network 15 via a connection link 151. The home gateway device 16 is configured to handle, among other functions, audio / video gateway functions and is named gateway 16 hereafter. This home gateway is also configured to interconnect the broadband network 15 to a local home network 19 of LAN type, called here local network 19 thanks to an access point device 16a integrated into the home gateway 16 (not shown in FIG. 1) and an antenna system 161 of the access point device 16a. According to the example shown in Fig. 1, a smart phone device 17 here called smartphone 17 as well as a smart TV 18 are connected to the local network 19. Of course, other devices can be connected to the local network 19.

This configuration of the communication network 1 which comprises the broadband network 15 and the local network 19 is such that devices comprising a content, video or even audio and/or video player device can operate a rendering (restitution) of a streaming content, that is to say by operating a rendering of this content while downloading it from the unicast server 13, the multicast server 14 or according to the useful speeds in the communication network 1, alternatively both at the same time.

Note that in the remainder of this description, an audio and/or video content player device is also called an audio and/or video content player, or quite simply a "player".

For example, if a problem occurs from time to time in multicast transmission mode during a streaming session between the multicast server 14 and the smart TV 18, the smart TV 18 can obtain a portion of this content from the unicast server 13. Reverse is also possible, that is to say that if an audio and/or video content is not accessible from the unicast server 13 during a unicast streaming session, the smart TV 18 can obtain a portion of this content from the multicast server 14. Obviously, the same reasoning applies to the smartphone 17 which can obtain portions of an audio and/or video content from one or the other of the unicast 13 and multicast 14 servers depending on the transmission conditions observed in the communication network 1. Advantageously, a gateway audio and/or video distribution agent device 16g for distributing audio and/or video content, also called "agent" 16g here, organizes and optimizes the provision of audio and/or video content available from content servers 13 and 14 of the communication network 1 for receiver devices and audio and/or video content players within such devices. The agent 16g can for example be implemented in hardware form or else in software form executed by a processor itself implemented in hardware form.

Thus, the agent 16g of the gateway 16 is therefore in particular configured to organize and optimize the distribution of audio and/or video content between the unicast 13 and multicast 14 servers, on the one hand, and the smart TV 18 and smartphone 17 devices, on the other hand.

According to the example described each of the available contents from the unicast server 13 and multicast server 14 (for example a film, a documentary, a live program from a television channel) is available in several versions corresponding respectively to different levels of quality and therefore, consequently, at different levels of transmission rates during a transfer. Such a configuration allows an audio and/or video content transmission process with adaptive bit rate. Each of the versions of the same content is also composed of successive portions of fixed length, so that in the event of congestion or problems during the transmission of a content, it is possible to switch from one version given to a version requiring a lower transmission rate. Conversely, when the transmission conditions are ideal, and in the absence of transmission problems, it is possible to increase the quantity of data to be transmitted and therefore the quality of the audio and/or video content and the quality of final rendering.

In order to be able to obtain audio and/or video content from one of the content servers, a player must know where he can obtain the successive portions of content that make up this content, for each of the content versions, both with regard to a unicast streaming session than for a multicast streaming session. To do this, he must obtain an information file, also called a metadata file, which includes metadata useful for the transmission of the different portions of content in each of the versions. Such a metadata file is usually called a "manifest file" and includes in particular precise addresses of content or content portions on servers where to find the different portions of audio and/or video content available.

But the disparity in the processing capacities of the various devices designed to receive, decode and then render audio and/or video content is such that for some of them (the devices), it is not useful to obtain an exhaustive list of all versions of the same content, insofar as they are not necessarily able to process them. For example, if a smart television such as the smart TV 18 is most often capable of processing coded content in order to be rendered with high graphic resolutions, this is not the case for devices of the smartphone type or devices of connected watch type, for example. In addition, depending on the service levels subscribed to, or user groups, there may be disparities in terms of access to an audio and/or video content. Thus, many many versions of specific metadata manifest files can exist to describe different versions of the same content. In the remainder of this description, a "generic metadata file" describes (or means) a manifest-type metadata file that includes descriptors for all the versions of an audio and/or video content, and a "specific metadata file" describes (or means) a metadata file which includes only a subset of all these versions of a content. A generic metadata file is also known as a "global metadata file" of a "global manifest file". A specific metadata file is also known as a "personalized metadata file" of a "personalized manifest file".

The wide diversity of manifest type metadata files is such that they should not be transmitted in a multicast transmission mode since this would cause a substantial loss of bandwidth in the communication network. Therefore, generic manifest type metadata files are sent in multicast transmission mode and specific manifest type metadata files are sent in unicast transmission mode although both types of manifest files (generic and specific) do references to the same portions of content and are linked and identifiable by a naming convention and therefore by their respective names.

Depending on the configurations and/or contexts of use and subscription to services, the degree of customization of a specific metadata file may be such that there is a version of the specific metadata file per user or even a version of the specific metadata file per audio and/or video content player.

For example, a generic manifest-type metadata file for a television program broadcast on a channel named "channel 1" can include four descriptors referring to four content versions, each corresponding to a predefined average transmission rate:
Example of generic metadata file for "channel 1" program :
   "channel1/all/manifest.mpd"
      version 1: 1 Mb/s
      version 2 : 2 Mb/s
      version 3 : 3 Mb/s
      version 4 : 4 Mb/s
   and a specific metadata file of type manifest for this same "Channel 1" television program, dedicated to players likely to process only content of relatively limited resolution can include only the two versions of the content of the television program presenting the two smallest resolutions among all those listed in the generic metadata file:
Example of specific metadata file for "channel 1" program :
   "channel1/mob/OS2/player3/manifest.mpd"
   version 1: 1 Mb/s
   version 2 : 2 Mb/s

Cleverly and advantageously, the agent 16g of the gateway 16 is configured to operate a synchronization between a restitution of a content started according to a unicast transmission mode, the unicast restitution of which is initiated from at least one obtaining of a specific required metadata file (therefore personalized) received according to a unicast transmission mode, and a restitution according to this same content continued a multicast transmission mode, whose multicast restitution is established from a generic acquired metadata file associated with the specific required metadata file, for example via a naming convention (i.e. "channel1/all/manifest.mpd" as name for a generic metadatafile with corresponding name "channel1/mob/OS2/player3/manifest.mpd" for a specific metadatafile).

Such synchronization is carried out by conditionally supplying, to an audio and/or video content player configured for the rendering of a given audio and/or video content, and connected to the local network 19, the specific metadata file, according to a synchronization condition defined by identifiers of portions of an audio and/or video content respectively present or not in the generic and specific metadata files respectively transmitted in multicast from the multicast server 14 and in unicast from the unicast server 13.

According to an embodiment, there is one circular buffer used to cache both multicast and unicast files and objects including generic multicast metadata manifest files and specific unicast metadata manifest files.

The agent 16g of the gateway 16 only transmits a specific metadata file to a player wishing to render content if pre-established conditions of availability of portions of content in multicast are met.

To this end, when the agent 16g of the gateway 16 records in the buffer memory of the circular buffer type the generic metadata files of the manifest file type, it identifies and stores for each of them the identifier of portions of audio content and/or video of the latest available portion of audio and/or video content referenced in this generic metadata file, whether that portion of content has already been received or is to be received soon.

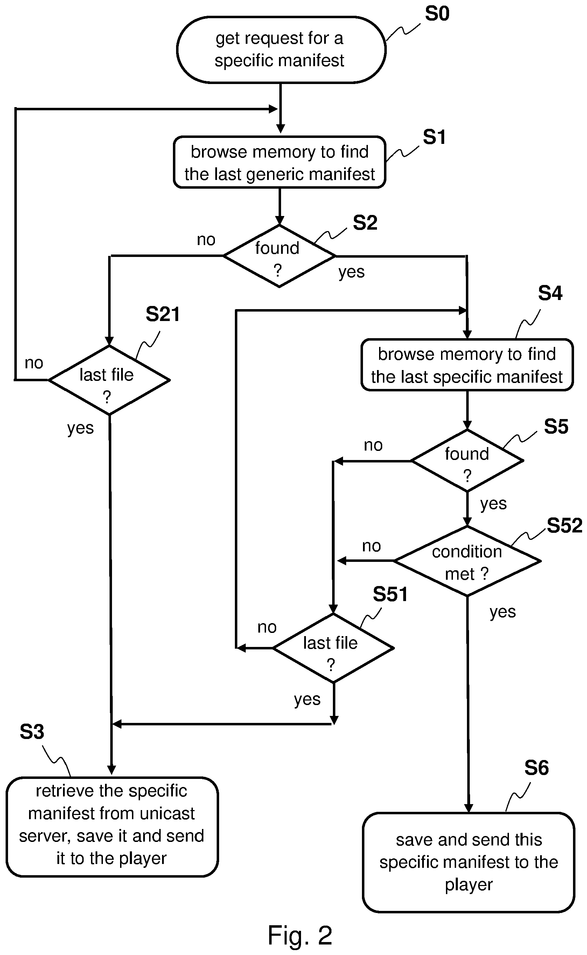

Thus, when the agent 16g of the gateway 16 receives a request for a specific unicast metadata file from a player present in a device connected to the local network 19, the agent 16g operates the following sequence described in relation to **Fig. 2**.

Fig. 2 is a diagram representing an example of implementation of a unicast/multicast synchronization method carried out by the agent 16g of the gateway 16, according to a particular and non-limiting embodiment of the invention.

Step **S0** is an initialization step at the end of which the agent 16g of the gateway 16 is normally configured and operational, just like all the systems of the gateway 16 and more generally all the devices described in relation to the Fig. 1.

In addition, at the end of this step S0, the agent 16g of the gateway 16 has received a request from a player device (such as the smart TV 18 or the smartphone 17), which request aims to obtain a specific metadata manifest file describing portions of an audio and /or video content being rendered or to be rendered by the audio and/or video content player. Upon receipt of the request to obtain a specific manifest file, the agent 16g of the gateway 16 scans its reception buffer in order to find a generic metadata manifest file there, and all the more so, in the case where several generic metadata manifest files are present in the reception buffer, in order to find the most recent generic metadata manifest file.

To do this, the agent 16g iteratively browses, during successive steps S1, S2 and S21, the reception buffer and successively analyzes the found files (or logical objects) present in the reception buffer used by the agent 16g of the gateway 16.

Step **S1** consists of scanning the current file in the path carried out in the reception buffer so as to check whether the currently analyzed file (also so-called here "current file") is a metadata manifest file of generic type or not. This scanning is carried out when there remains at least one file to analyze in the reception buffer, otherwise the agent executes step **S2.**

If at step S1 the current file analyzed is not a generic metadata manifest file, the agent 16g executes step **S21** and checks at this step S21 if the current file is the last file available in the reception buffer or if it remains one or more files to be analyzed in the reception buffer.

If there remains at least one file, the process loops back to step S1, if there are no files left to analyze and no generic metadata manifest has been identified in the buffer of reception, the agent 16g executes step **S3,** subsequent to step S21.

In this step S3, the agent 16g sends a request to the unicast server 13 in order to obtain from the unicast server 13 the required specific metadata manifest file, then saves it in its memory and then transmits it to the player device having transmitted the received request during step S0.

Let's now go back to step S2: if the current file analyzed is a generic metadata manifest file, it is checked whether it is the most recent one available in the reception buffer. To do this, the agent 16g stores information representative of its order (or its instant of arrival) in the reception buffer, taken from the name of the file, or from a header or even from a parameter included in the file provided for this purpose, depending on the file format.

In the event that the current file is then detected at this stage of step S2 as being the most recent of the generic metadata manifest files available in memory, the agent 16g saves it in a dedicated memory location with a view to possibly using it afterwards, as such.

If it appears at step S2 that the current file is a generic metadata manifest file, but that it is not necessarily the most recent among several generic manifest files, the agent 16g of the gateway 16 continues to scan the memory buffer by operating one or more scanning loops, if any, via execution of steps S21 and S1, then S2 again.

If, during step S2, it is detected that all the files present in the reception buffer have been analyzed (thanks to S21 step), and that a generic metadata manifest file has been identified as being the only generic metadata manifest file available or even the most recent generic metadata manifest file available among several generic metadata manifest files present in the reception buffer, then the agent 16g of the gateway 16 executes in sequence the branch of the diagram comprising the steps S4, S5, S51 and S52 which aims to identify the specific metadata manifest files in the reception buffer, and ideally the most recent one, for the purpose of proceeding to a verification step of a unicast / multicast synchronization condition in step S52.

At step **S4** the agent 16g of the gateway 16 reads the current file so as to determine whether this current file is a specific metadata manifest file, and if so, determines at step **S5** whether this file can be considered as the most recent one from a plurality of specific metadata manifest files.

If this is not the case, the agent 16g determines in step **S51,** if the current file analyzed is the last file available for analysis (not yet analyzed) in the reception buffer.

If one or more files remain to be analyzed in the reception buffer, the agent 16g loops back to step S4.

Otherwise, if all the files present in the memory have been analyzed, without a specific metadata manifest file having been found, the agent 16g executes step S3 to get a specific metadata manifest file from the unicast server 13, to save it and to send it to the player that made the request at step S0.

In the case where, in step S5, a single specific metadata manifest file has been identified after the traversal of the reception buffer or else a specific metadata manifest file identified as the most recent among a plurality of specific metadata manifest files has been identified, the unicast/multicast synchronization condition is tested at step **S52.**

To do this, at step S52, the agent 16g of the gateway 16 determines (or reads) an identifier (here called second identifier) of the most recent portion of audio and/or video content (latest received or to be received) according to the generic metadata manifest file identified in the receive buffer, together with an identifier (here referred to as first identifier) of the most recent (latest received or to be received) portion of audio and/or video content according to the specific metadata manifest file identified in the reception buffer.

According to an embodiment, these first and second identifiers are sequence numbers of said audio and/or video content defining a chronological order of presentation of said portions of said audio and/or video content when playing said audio and/or video content, according to a predefined convention implying that a higher identifier value corresponds at a reading (or rendering or playing) time of an audio and/or video content consecutive to a reading (or rendering or playing) time corresponding to a lower identifier value. These two identifiers are, for example, sequence numbers of portions of the same audio and/or video content.

According to one embodiment, the unicast/multicast synchronization condition tested consists of verifying that the first content portion identifier, extracted from the specific metadata manifest file, has a value less than or equal to the second identifier, extracted from the generic metadata manifest file. If this is the case, the specific metadata manifest file from which said first identifier is extracted is sent at step **S6** to the content player having sent the request during step S0, otherwise a specific metadata manifest file is requested from the unicast server 13 in S3, then sent to the player according to the details of step S3 previously described and the complete process will be restarted.

According to one embodiment, the agent 16g of the gateway 16 loops back to step S1 and executes the synchronization process from the files or logical objects included in the reception. According to one embodiment, the agent 16g of the gateway 16 loops back to step S1 and executes the synchronization process from the files or logical objects included in the buffer memory on reception and whose content may have changed since the previous iteration of the process.

According to a variant embodiment, the agent 16g of the gateway 16 loops back to step S0 by waiting for a new request from a player device in order to obtain a specific manifest file.

Advantageously, such method makes it possible to guarantee the availability of the portions of audio and/or video content according to a transmission in multicast mode from the multicast server 14 before sending the specific metadata file to an audio and/or video content player having requested it from the gateway 16 or more precisely to the agent 16g of gateway 16.

In addition, the audio and/or video content player will be able to initiate a rendering of the content for which it is configured, from the reception of a metadata file, and even before the condition tested is satisfied, even if the situation is not ideal at this stage in terms of transmitting the portions of content to be rendered.

According to an embodiment, when the agent 16g identifies a specific of generic metadata file in its memory and this file was received before a certain amount of time (the file then deemed to be "too old" or obsolete), this metadate file is then dismissed. The agent 16g then sends a request to the unicast server 13 to get the specific metadata file expected by the player.

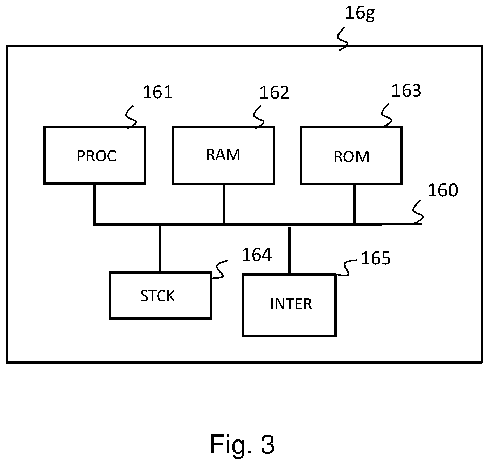

**Fig. 3** schematically illustrates an example of internal architecture of the gateway agent 16g. It should be noted that Fig. 3 also schematically illustrates an example of hardware architecture of the digital core of the gateway 16 comprising the gateway agent 16g, or an example of hardware architecture of the wireless access point 16a, or even an example of hardware architecture of any piece of equipment comprising the gateway device also named gateway 16.

According to the hardware architecture example shown in Fig. 3, gateway agent 16g then comprises, connected by an internal communication bus 160: a processor or CPU (Central Processing Unit) 161; a random access memory (RAM) 162; a read only memory ROM (Read Only Memory) 163; a storage unit such as a hard disk (or a storage medium reader, such as an SD ("Secure Digital" in English) card reader 164; a module of communication interfaces 165 allowing the gateway agent 16g and more broadly the entire home gateway 16 to communicate with devices present in the communication network 1, such as, for example, the multicast server 14, the unicast server 13, the smart TV 18 and the smartphone 17 or any cache server in the WAN network 15.

The processor 161 can execute instructions loaded into RAM 162 from ROM 163, external memory (not shown), storage medium (such as an SD card), or a communications network. When the gateway agent 16g is powered up, processor 161 can read instructions from RAM 162 and execute them. These instructions form a computer program causing the implementation, by the processor 161, of part of a method described in relation to Fig. 2.

All or part of the method implemented by the gateway agent 16g, or its variants described, can be implemented in software form by executing a set of instructions by a programmable machine, for example a DSP (Digital Signal Processor " in English) or a microcontroller, or be implemented in hardware form by a machine or a dedicated component, for example an FPGA ("Field-Programmable Gate Array") or an ASIC ("Application-Specific Integrated Circuit" in English ). In general, the gateway agent 16g includes electronic circuitry configured to implement the method described in relation to itself as well as to the other devices connected to the communication network 1 and any other device involved in performing the method of the invention. Of course, the gateway agent 16g and broadly the home gateway 16, further comprises all the elements usually present in a system comprising a control unit and its peripherals, such as a power supply circuit, a supervision circuit supply, one or more clock circuits, a reset circuit, input-output ports, interrupt inputs, bus drivers, this list is obviously not exhaustive.

## Claims

1. Method for providing, by an audio and/or video gateway device (16), to an audio/video content player device (17, 18), a specific file of metadata relating to a transmission of portions of an audio/video content, said audio / video content being in the process of being played or to be played by said player device (17, 18), via a transmission from an audio/video content server (14) and according to a multicast type transmission mode, the method comprising a step of conditionally supplying to said player device (17, 18) a specific file of metadata, obtained according to a unicast transmission mode, depending on whether a first identifier of a first portion of an audio/video content referenced in said specific metadata file, has a value less than or equal to the value of a second identifier, of a second portion of said audio/video content corresponding to said first portion of said audio/video content, as referenced in a generic metadata file, made available to said audio/video content player device (17, 18) or to said gateway device (16) via a transmission link operating in multicast mode and obtained by said gateway device (16).

2. Method for providing a specific metadata file according to claim 1, comprising, performed by said gateway device:
- obtaining, from a multicast receiving interface of said gateway device (16), said generic metadata file describing said audio/video content,
- obtaining and storing said second identifier of a portion of said content, from said generic metadata file, said second identifier corresponding to a latest available portion of audio/video content among a plurality of portions of said content referenced in said generic content description metadata file,
- obtaining, from a unicast receiving interface of said gateway device (16), said specific metadata file describing said audio/video content, the portions of audio/video content referenced by the metadata of said specific metadata file being a subset of the portions of audio/video content referenced by the metadata of said generic metadata file, and,
- obtaining and storing said first identifier of a portion of said content, from said specific unicast metadata file, said first identifier corresponding to the latest available portion of audio/video content among a plurality of portions of said content referenced in said specific unicast content description metadata file.

3. Method for providing a specific metadata file according to one of claims 1 and 2, wherein, in case of impossibility of obtaining, by said gateway device (16), said generic metadata file within a first predefined time, said audio/video gateway device (16) transmits to said audio/video content player device (17, 18) a unicast transmission metadata file previously obtained from an audio/video content server via a unicast transmission mode.

4. Method for providing a specific metadata file according to one of claims 1 to 3, wherein, in case of impossibility of obtaining by said gateway device, said specific metadata file within a second predefined time, said audio/video gateway device (16) transmits to said audio/video content player device (17, 18) a unicast transmission metadata file previously obtained from an audio/video content server via a unicast transmission mode.

5. A method of providing a specific metadata file according to one of claims 1 to 4, wherein said first identifier and said second identifier are sequence numbers of said audio/video content defining a chronological order of presentation of said portions of said audio/video content upon playback of said audio/video content, according to a predefined convention implying that a higher identifier value corresponds to a time of playback of audio/video content subsequent to a playback time corresponding to a lower identifier value.

6. Method for providing a specific metadata file according to one of claims 4 and 5, wherein, in case of impossibility to obtain a metadata file, said gateway device stores in a reference memory a sequence number, called "unicast sequence number", obtained in a unicast metadata file, said sequence number.

7. Computer program product **characterized in that** it comprises program code instructions for executing the steps of the method according to any one of claims 1 to 6, when said program is executed by a processor.

8. Information storage medium comprising a computer program product according to the preceding claim.

9. Audio/video gateway device (16) comprising electronic circuitry configured to supply, to an audio/video content player device, a specific file of metadata relating to a transmission of portions of an audio/video content, said content being in the process of being played or to be played by said player device (17, 18), via a transmission from an audio/video content server and according to a multicast type transmission mode, the audio/video gateway device comprising circuitry configured for conditionally supplying said player device with a specific file of metadata, obtained according to a unicast transmission mode, depending on whether or not a first identifier of a first portion of an audio/video content referenced in said specific metadata file, has a value less than or equal to the value of a second identifier, of a second portion of said audio/video content corresponding to said first portion of said audio/video content, as referenced in a generic metadata file, made available to said audio/video content player device or to said gateway device via a transmission link operating in multicast mode and obtained by said gateway device.

10. The audio/video gateway device (16) of the preceding claim further comprising electronic circuitry configured to:
- obtaining, from a multicast receiving interface of said gateway device, said generic metadata file describing said audio / video content,
- obtaining and storing said second identifier of a portion of said content, from said generic metadata file, said second identifier corresponding to a portion of audio/video content that is available the latest among a plurality of portions of said content referenced in said generic content description metadata file,
- obtaining, from a unicast receiving interface of said gateway device, said specific metadata file describing said audio/video content, the portions of audio/video content referenced by the metadata of said specific metadata file being a subset of the portions of audio/video content referenced by the metadata of said generic metadata file, and
- obtaining and storing said first identifier of a portion of said content, from said specific unicast metadata file, said first identifier corresponding to the latest available portion of audio/video content among a plurality of portions of said content referenced in said specific unicast content description metadata file.
